# EUROPEAN PATENT SPECIFICATION

(11) **EP 4 079 147 B1**
(45) Date of publication and mention of the grant of the patent: **21.01.2026**
(21) Application number: 22168662.9
(22) Date of filing: 15.04.2022
(51) Int. Cl.: B08B 5/02, A01J 27/00, A23C 19/14, B08B 3/02

(54) **SYSTEM AND METHOD FOR THE SURFACE CLEANING OF A WHEEL OF CHEESE**
SYSTEM UND VERFAHREN ZUR OBERFLÄCHENREINIGUNG EINES KÄSELAIBS
SYSTÈME ET MÉTHODE POUR LE NETTOYAGE DE SURFACE D'UNE ROUE DE FROMAGE

(30) Priority: 20.04.2021 IT 202100009944
(43) Date of publication of application: 26.10.2022
(73) Proprietor: Colussi Ermes SRL, 33072 Casarsa Della Delizia (PN) (IT)
(72) Inventor: COLUSSI, Giovanni Battista, 33072 Casarsa della Delizia (PN) (IT)
(74) Representative: Frare, Paolo

(56) References cited:
- FR-A1- 2 295 694
- GB-A- 1 320 904

## Description

The present invention relates to a system and to a method for the surface cleaning of a wheel of cheese comprising a rind, rigid or semi-rigid, which encloses an edible paste.

It is known that certain types of cheese, and in particular cheeses with a rind, rigid or semi-rigid, which encloses an edible paste, require, before cutting and eventual packaging, the removal from the rind of any dirt, mould or other material that may have formed and/or been deposited on the rind during the ripening process.

In order to achieve the cleaning of the rind on an industrial scale, automated cleaning systems are now known to be used, which generally comprise a tunnel through which the wheels of cheese are passed, typically by means of rollers or conveyor belts, and within which these wheels of cheese are subjected to a surface cleaning treatment.

A first known type of such cleaning systems comprises rotating brushes, whose bristles protrude radially from rollers rotated by electric motors, which brush the rind of the wheels of cheese passing through the tunnel in order to mechanically remove dirt, mould or other materials present on the rind.

Such known cleaning systems, however, have some drawbacks.

In particular, the rotating brushes can penetrate the rind of certain types of cheese, in particular cheeses whose rind is particularly soft,
such as Gorgonzola and other blue cheeses, and ruin the rind beyond repair.

In addition, the rotating brushes accumulate part of the material removed from the rind among the bristles, and therefore require frequent cleaning, during which the system cannot be used.

In addition, the mechanical removal obtained with the brushes does not guarantee complete and reliable cleaning of the entire rind, with the risk that unwelcome moulds or bacteria, for example, may remain on it.

Cleaning systems in which the rind of the cheese is cleaned by spraying high-pressure jets of water against it are also known; however, even these known systems have some drawbacks.

In particular, the water that is sprayed against the rind can remain on it after spraying, with the risk both of excessively moistening the rind (and therefore ruining it) and of penetrating into the edible paste, with the risk of deteriorating it.

This drawback is particularly felt in blue cheeses, such as Gorgonzola, as the rind of the same, in addition to being particularly soft, is usually pierced during the ripening process to encourage the development of the characteristic moulds inside the edible paste.

GB1320904A discloses a cheese washing machine provided with a conveyor for moving one or more rows of cheese portions past nozzles which apply high pressure water jets to at least some of the cheese surfaces and which are operated to move transversely to the cheese movement.

FR2295694A1 discloses a washing and drying tunnel for cheeses in which whole cheeses are conveyed continuously through a tunnel to be subjected to the following stages of treatment in successive zones of the tunnel: a liquid spray washing stage, a first drying stage in a current of air, a second drying stage with air at the same temperature as in the first drying stage but extending through a longer zone of the tunnel, an air cooling stage in a shorter zone than that of the second drying stage, using cool air which enables the cheeses to be discharged at about 18 degrees to 22 degrees C.

The main aim of the present invention is to obtain a system and a method for the surface cleaning of a cheese comprising a rind, rigid or semi-rigid, which encloses an edible paste, which guarantees an effective cleaning of the rind, minimizing the risk of deterioration of the cheese due to or as a result of such cleaning, even in the presence of a very soft rind, as for example in the case of Gorgonzola or other blue cheeses.

In the context of this aim, one purpose of the present invention is to obtain a system and a method for the surface cleaning of a wheel of cheese which requires relatively infrequent maintenance and cleaning, thereby reducing maintenance costs and machine downtime.

Another purpose of the invention is to obtain a system and a method for the surface cleaning of a wheel of cheese that guarantees a reliable cleaning of the entire rind, reducing the risk that unwelcome moulds or bacteria, for example, may remain on it.

The aim and purposes according to the present invention are achieved by a system according to claim 1 for the surface cleaning of a wheel of cheese comprising a rind, rigid or semi-rigid, which encloses an edible paste, said system comprising:
- treatment means suitable for cleaning the rind of a wheel of cheese;
- handling means, suitable for generating a relative motion between a wheel of cheese and the treatment means, wherein the treatment means comprise first supply means, of a liquid, and second supply means, of a fluid in the gaseous state, suitable for dispensing a first jet, of a liquid, and a second jet, of a fluid in the gaseous state, respectively, which hit, at the same time, two regions, respectively, which are contiguous, of the rind of a wheel of cheese which is in relative motion with respect to the treatment means by the action of the handling means,
wherein the handling means, the first supply means and the supply means, are configured in such a way that a same region of the rind of a wheel of cheese, in relative motion with respect to the treatment means by the action of the handling means, is hit firstly by the first jet and, after a predetermined time interval, by the second jet.

The aim and purposes of the invention are also solved by a method according to claim 9 for the surface cleaning of a wheel of cheese comprising a rind, rigid or semi-rigid, which encloses an edible paste, comprising the following steps:
- generating, by handling means, a relative motion between the wheel of cheese and treatment means comprising first supply means, of a liquid, and second supply means of a fluid in the gaseous state, suitable for dispensing a first jet of a liquid, and a second jet, of a fluid in the gaseous state, respectively;
- hitting a same region of the rind, during the relative motion, firstly with the first jet and then, after a predetermined time interval, with the second jet, wherein the predetermined time interval is less than one second, preferably less than 0.5 seconds, more preferably less than 0.1 seconds.

Advantageously, the first jet is dispensed at a pressure between 0.1 bar and 250 bar, preferably equal to 20 bar.

Advantageously, the second jet is dispensed at a pressure between 0.1 bar and 20 bar, preferably equal to 1 bar.

Other advantageous features of the invention are reported in the dependent claims.

The features and advantages of the present invention will be more apparent from the following description, which is to be understood as exemplifying and not limiting, with reference to the appended schematic drawings, in which:
- Figure 1 is a schematic plan view of a first advantageous embodiment of part of a system according to the invention;
- Figure 2 is a schematic, perspective view of the system part of Figure 1;
- Figure 3 is a schematic plan view of a second advantageous embodiment of part of a system according to the invention;
- Figure 4 is a schematic, perspective view of the system part of Figure 3;
- Figure 5 is a schematic, perspective view of a third advantageous embodiment of part of a system according to the invention;
- Figure 6 is a schematic side view of part of a fourth embodiment of the system according to the invention.

With reference to the appended figures, a system for the surface cleaning of a wheel of cheese, illustrated schematically in the appended figures, and indicated by number 2, comprising a rind 3, rigid or semi-rigid, which encloses an edible paste, not illustrated, has been indicated overall by number 1.

Advantageously, the system 1 may comprise a treatment chamber, e.g. a tunnel, not illustrated, within which the wheels of cheese 2 are subjected to a surface cleaning treatment.

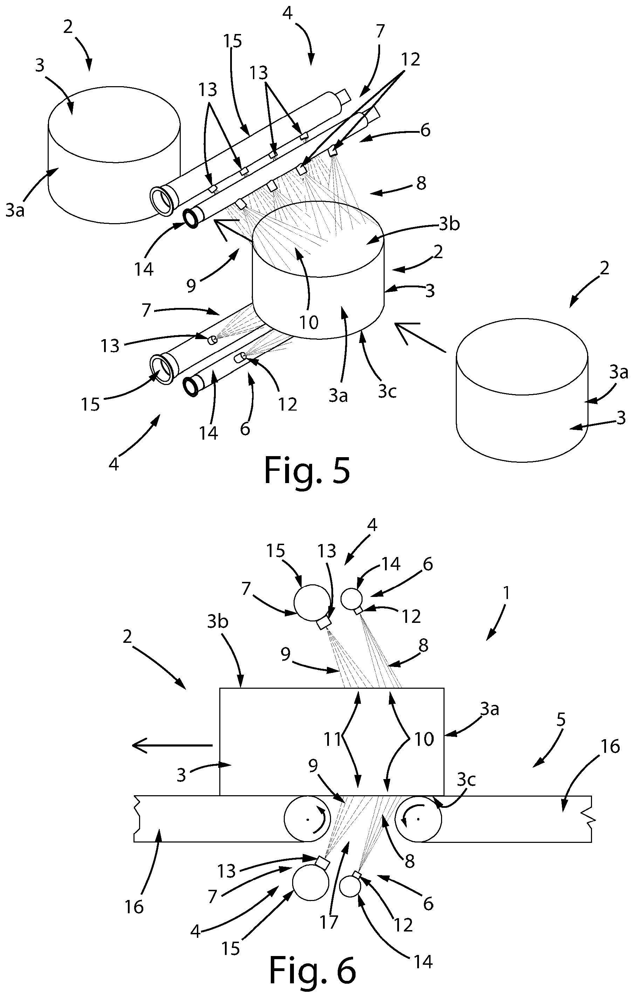

The system 1 comprises treatment means, collectively denoted by number 4, suitable for cleaning the rind 3 of the wheel of cheese 2, and handling means 5 (an example of which is illustrated in Figure 6), suitable for generating a relative motion between the wheel of cheese 2 and the treatment means 4.

According to the invention, the treatment means 4 comprise first supply means 6, of a liquid, and second supply means 7, of a fluid in the gaseous state, suitable for dispensing a first jet 8, of a liquid, and a second jet 9, of a fluid in the gaseous state, respectively, which hit, at the same time, two regions 10 and 11, respectively, which are contiguous (i.e. very close to or confined to each other), of the rind 3 of a wheel of cheese 2 which is in relative motion with respect to the treatment means 4 by the action of the handling means 5.

Advantageously, the first jet is dispensed at a pressure between 0.1 bar and 250 bar, preferably equal to 20 bar.

Advantageously, the second jet is dispensed at a pressure between 0.1 bar and 20 bar, preferably equal to 1 bar.

Advantageously, the first and second supply means can be configured in such a way that the first and second jets are either completely disjointed or partially superimposed.

In an advantageous embodiment, the first and second supply means may be configured so as to vary the mutual position of the first and second jets.

Advantageously, like in the embodiments illustrated in the appended figures, the first supply means 6 may dispense a plurality of first jets 8, of a liquid.

Advantageously, like in the embodiments illustrated in the appended figures, the second supply means 7 may dispense a plurality of second jets 9, of a fluid in the gaseous state.

According to the invention, the handling means 5, the first supply means 6, and the second supply means 7, are configured in such a way that a same region, for example the region 10 of the rind 3 of a wheel of cheese 2, in relative motion with respect to the treatment means 4 by the action of the handling means 5, is hit firstly by the first jet 8, of liquid, and, after a predetermined time interval Δt, by the second jet 9, of fluid in the gaseous state.

The predetermined time interval Δt is less than 1 second, preferably less than 0.5 seconds, more preferably equal to 0.1 seconds.

It should be noted that the first jet 8 removes from the region of the rind 3 hit by it any dirt, mould, or other material that may have formed or been deposited on the rind 3 during the ripening process.

The second jet 9, by hitting after a predetermined time interval Δt, which is advantageously very short (therefore, substantially, "immediately after"), the same region of the rind 3 that has just been hit by the first jet 8, removes from this region any residues of the liquid of the first jet 8 that may have remained on the rind 3, thus preventing any such residues from ruining the rind 3 and/or penetrating into it, reaching the edible paste of the cheese, with the risk of deteriorating it.

Advantageously, the liquid dispensed by the first supply means 6 is or comprises water, or water added with one or more desired additives, such as food-grade disinfectant substances, for example salt; advantageously, such liquid can be brought to the first supply means 6 by means of a special hydraulic system, not illustrated, of the system 1, connected or connectable, for example, to the hydraulic system of a building, not yet illustrated.

Advantageously, the fluid in the gaseous state dispensed by the second supply means 7 is or comprises air or water vapor; advantageously, such fluid may be brought to the second supply means 7 by means of a suitable distribution system of a compressed fluid in the gaseous state (e.g. compressed air), not illustrated, comprising, for example, suitable pipings and tanks, and/or compressors for fluids in the gaseous state.

In the case of water vapor, the same may be generated, for example, in a suitable steam generator, or boiler, not illustrated, comprised in the system 1, and in fluid connection with the second supply means 7, preferably with the interposition of suitable valves, not illustrated, which allow the controlled dispensing of said water vapor.

In an advantageous embodiment, the treatment means 4 comprise means for treating a liquid, not illustrated, configured to heat (e.g., an electrical resistance which is positioned so as to come into contact with the liquid before dispensing it through the first supply means 6) and/or to sanitize (e.g., an ultraviolet lamp configured to irradiate the liquid with an ultraviolet light before dispensing it through the first supply means 6) and/or to filter (e.g., a mesh filter which is positioned so as to filter the liquid before dispensing it through the first supply means 6) a liquid before dispensing it through the first supply means 6.

In an advantageous embodiment, the treatment means 4 comprise means for treating a fluid in the gaseous state, not illustrated, configured to heat (e.g., an electrical resistance which is positioned so as to come into contact with the fluid in the gaseous state before dispensing it through the second supply means 7) and/or to sanitize (e.g., an ultraviolet lamp configured to irradiate with an ultraviolet light the fluid in the gaseous state before dispensing it through the second supply means 7) and/or to filter (e.g., a cyclonic filter which is positioned so as to filter the fluid in the gaseous state before dispensing it through the second supply means 7) a fluid in the gaseous state, before dispensing it by the second supply means 7.

In an advantageous embodiment, the first supply means 6 comprise one or more first nozzles 12, each capable of dispensing a first jet 8 of a liquid, and the second supply means 7 comprise one or more second nozzles 13, each suitable for dispensing a second jet 9 of a fluid in the gaseous state; advantageously, each of said one or more first nozzles 12 is associated with one of said one or more second nozzles 13 in such a way that the first jet 8 and the second jet 9 dispensed by them respectively, hit firstly one, and then, after the predetermined time interval Δt, the other, a same region, for example the region 10, of the rind 3 of a wheel of cheese 2 in relative motion with respect to the treatment means 4 by the action of the handling means 5.

In advantageous embodiments, such as, for example, those illustrated in the appended figures, one or more first nozzles 12 are mounted on, and in fluid communication with, a first conduit 14, advantageously hydraulically connected to a hydraulic system, not illustrated, of the system 1, so that said one or more first nozzles 12 dispense, in the form of as many one or more first jets 8, the liquid, for example water, which reaches them through the first conduit 14.

Advantageously, the system 1 may comprise two or more first conduits 14, on each of which one or more first nozzles 12 are mounted; said two or more first conduits 14 may be advantageously arranged in such a way that the one or more first jets 8 dispensed by the one or more first nozzles 12 of different first conduits 14 strike, at the same time, on different areas of the rind 3 of a wheel of cheese 2 in relative motion with respect to the treatment means 4 by the action of the handling means 5.

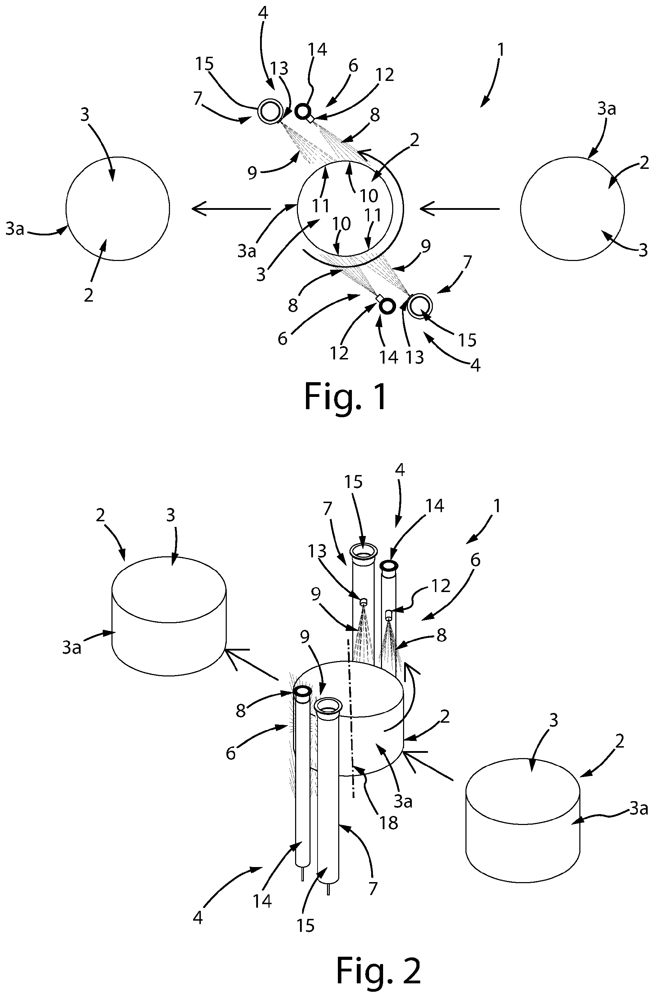

For example, as in the advantageous embodiment illustrated in Figures 1 and 2, two first conduits 14 are advantageously mounted in such a way as to be diametrically opposite with respect to a wheel of cheese 2, advantageously substantially cylindrical or prismatic, in relative motion with respect to the same by the action of the handling means 5, so as to hit, respectively with one or more first jets 8, respectively two diametrically opposite regions of the lateral surface 3a of the rind 3.

In advantageous embodiments, such as, for example, those illustrated in the appended figures, one or more second nozzles 13 are mounted on, and in fluid communication with, a second conduit 15, advantageously in fluid communication with a suitable distribution system of a compressed fluid in the gaseous state, not illustrated, so that said one or more second nozzles 13 dispense, in the form of as many one or more second jets 9, the fluid in the gaseous state, for example air, or water vapor, which reaches them through the second conduit 15.

Advantageously, the system 1 may comprise one or more of said second conduits 15, each provided with one or more second nozzles 13.

Advantageously, in the advantageous case where the second conduits 15 are two or more, the same may be advantageously arranged in such a way that the one or more second jets 9 dispensed by the one or more second nozzles 13 of different second conduits 15 strike, at the same time, on different areas of the rind 3 of a wheel of cheese 2 in relative motion with respect to the treatment means 4 by the action of the handling means 5.

Advantageously, each of said one or more second conduits 15 may be arranged in such a way that the one or more second jets 9 dispensed by the respective one or more second nozzles 13 hit, after the predetermined time interval Δt, a region of the rind 3 previously hit by the one or more first jets 8 dispensed respectively by the one or more first nozzles 12 mounted on one of the one or more first conduits 14; preferably, this can be achieved by mounting each second conduit 15 contiguous, or side-by-side, at a predetermined distance, for example less than five centimetres, more preferably less than one centimetre, with respect to a first conduit 14, and by orienting each pair of contiguous first and second conduits in such a way that the respective one or more first nozzles 12 and one or more second nozzles 13 dispense the respective first and second jets so as to hit, at a determined time, respectively two contiguous regions 10 and 11 of the rind 3 of a wheel of cheese in relative motion with respect to said first and second conduits by the action of the handling means 5.

In advantageous embodiments, such as, for example, those illustrated in Figures from 1 to 4, one or more pairs of a first conduit 14 and a second conduit 15 are arranged so as to hit, with the respective one or more first jets 8 and one or more second jets 9, the lateral surface 3a of the rind of a wheel of cheese 2 in relative motion with respect to the same by the action of the handling means 5.

In further advantageous embodiments, such as, for example, those illustrated in Figures 5 and 6, the wheel of cheese advantageously presents a cylindrical, or prismatic, or parallelepiped, or cubic conformation, and, advantageously, one or more first nozzles 12 and one or more second nozzles 13 are arranged in such a way as to dispense the respective first jet 8 and second jet 9 on the upper surface 3b of the rind 3, in such a way that a same region of said upper surface 3b, in relative motion with respect to the treatment means 4 by the action of the handling means 5, is hit firstly by the first jet 8 and, after a predetermined time interval Δt, by the second jet 9; advantageously, one or more first nozzles 12 and one or more second nozzles 13 are arranged in such a way as to dispense the respective first jet 8 and second jet 9 on the lower surface 3c of the rind 3, in such a way that a same region of said lower surface 3c, in relative motion with respect to the treatment means 4 by the action of the handling means 5, is hit firstly by the first jet 8 and, after the predetermined time interval Δt, by the second jet 9.

Other arrangements of the first and second nozzles are however contemplated in the invention.

Advantageously, the handling means 5 may comprise one or more conveyor belts 16, or groups of conveyor rollers, not illustrated, on which a wheel of cheese 2 may be positioned, so as to be able to be moved with respect to the processing means 4, which may be static or mobile with respect to said conveyor belts 6, or rollers.

In an advantageous embodiment, such as, for example, that illustrated in Figure 6, the handling means 5 may comprise two or more conveyor belts 16 (or two or more groups of conveyor rollers, not illustrated) two by two contiguous and aligned with each other in such a way that a wheel of cheese 2, during handling, is carried from one of said conveyor belts 16 (or group of conveyor rollers) to a conveyor belt 16 (or group of rollers) that is contiguous thereto; advantageously, two contiguous conveyor belts 16 (or groups of rollers) are spaced out so that an opening 17 is defined between them through which the rind 3 of a wheel of cheese 2 passing from a conveyor belt 16 (or group of rollers) to a contiguous one, passing over the opening 17, is exposed to the treatment means 4 (for example a pair of a first nozzle 12 and a second nozzle 13) positioned below the opening 17, so that it can be cleaned by the latter.

In a further advantageous embodiment, not illustrated, the handling means 5 may comprise, for example, a chain handling system, not illustrated, for handling, for example, hooks or supports from which wheels of cheese 2 may be hung, e.g. tied with ropes or netting, so as to let them pass in proximity to the treatment means 4, so that the latter may carry out the cleaning of said wheels of cheese 2.

Advantageously, the handling means 5 may comprise rotation means suitable for rotating a wheel of cheese 2 relative to the treatment means 1, and/or vice versa, in such a way that, during rotation, firstly a first jet 8, of a liquid, and then, after the predetermined time interval Δt, a second jet 9, of a fluid in the gaseous state, hit a same region of the lateral surface 3a of the rind 3 of the wheel of cheese 2.

Advantageously, the rotation means may comprise cheese rotation means, not illustrated, suitable for rotating a wheel of cheese 2, preferably substantially cylindrical, or prismatic, or parallelepipedal, or cubic, or spherical, or ovoid, about its medium-central axis (e.g., in the case of a cylindrical shape, around the cylindrical axis 18), which is fixed with respect to the treatment means 4 and also, during the rotation of the wheel of cheese 2, with respect to the rest surface, not illustrated (for example the floor of an industrial hall), where the system 1 is located; advantageously, such cheese rotation means may comprise, for example, a support (for example a rotating platform, not illustrated), on which the wheel of cheese 2 may be positioned (for example, if cylindrical or prismatic or parallelepiped, or cubic, with one of its bases), which may be brought into rotation, for example, by an electric motor, not illustrated, connected to the same directly or through a suitable kinematic mechanism.

In a further advantageous embodiment, the rotation means may comprise means for rotating the treatment means 4 with respect to a wheel of cheese 2, and, preferably, around the medium axis thereof (for example, in the case of a cylindrical wheel of cheese 2, around the cylindrical axis 16 thereof), which is fixed with respect to the rest surface, not illustrated (for example, the floor of an industrial hall), where the system 1 is located, during the rotation of the treatment means 4.

Such rotation means of the treatment means 4 may comprise, for example in the case where the treatment means 4 comprise one or more first conduits 14, each provided with one or more first nozzles 12, and one or more contiguous second conduits 15, each provided with one or more second nozzles 13, a special kinematic mechanism, not illustrated, capable of rotating a first conduit 14 and a contiguous second conduit 15 about the medium-central axis (e.g., in the case of a cylindrical wheel of cheese 2, around the cylindrical axis 18 thereof), of the wheel of cheese 2, which is advantageously fixed with respect to the rest surface, not illustrated, for example the floor of an industrial hall, where the system 1 is located, during the rotation of the treatment means 4.

In further advantageous embodiments, the rotation means may comprise both rotation means of the cheese and rotation means of the treatment means 4, so that mutual rotation between wheel of cheese 2 and the treatment means 4 may be achieved by simultaneous or alternative action of the same.

In an advantageous embodiment, such as, for example, that illustrated in Figures 1 and 2, the rotation of the wheel of cheese 2 with respect to the treatment means 4 takes place in only one direction of rotation, and is complete (i.e., equal to at least 360 degrees), so that the entire lateral surface 3a of the rind 3 is exposed to the treatment means 4, and thus cleaned, during a complete rotation of the wheel of cheese 2.

In an advantageous embodiment, such as, for example, that illustrated in Figures 1 and 2, wherein the wheel of cheese 2 is advantageously substantially cylindrical, or prismatic, or parallelepipedal, two pairs each comprising one or more first nozzles 12 and corresponding one or more second nozzles 13 may be arranged in positions such that they are diametrically opposite with respect to the wheel of cheese 2 during the mutual rotation thereof with respect to the treatment means 4. In this case, the rotation of the wheel of cheese 2 with respect to the treatment means 4, in the same direction of rotation, may be partial, and in particular equal to 180 degrees, since, in this case, half of the lateral surface 3a of the rind 3 is cleaned by the first pair comprising one or more first nozzles 12 and corresponding one or more second nozzles 13, and the other half of the lateral surface 3a is cleaned by the second pair; however, it is possible to carry out a complete rotation, or even several rotations, so as to carry out a repeated cleaning of the lateral surface 3a.

In other advantageous embodiments, not illustrated, several pairs (for example three pairs) each comprising one or more first nozzles 12 and corresponding one or more second nozzles 13, may be arranged so as to be uniformly distributed around the wheel of cheese 2 during the mutual rotation thereof with respect to the treatment means 4; in this case, when rotating in a single direction of rotation, the minimum angle of mutual rotation between the wheel of cheese 2 and the treatment means 4 necessary to clean the entire lateral surface 3a of the rind 3 is equal to 360 degrees divided by the number of pairs present (for example, in the case of three pairs, a rotation equal to 120 degrees is sufficient, although a greater rotation is still possible, so as to carry out a repeated cleaning of the lateral surface 3a).

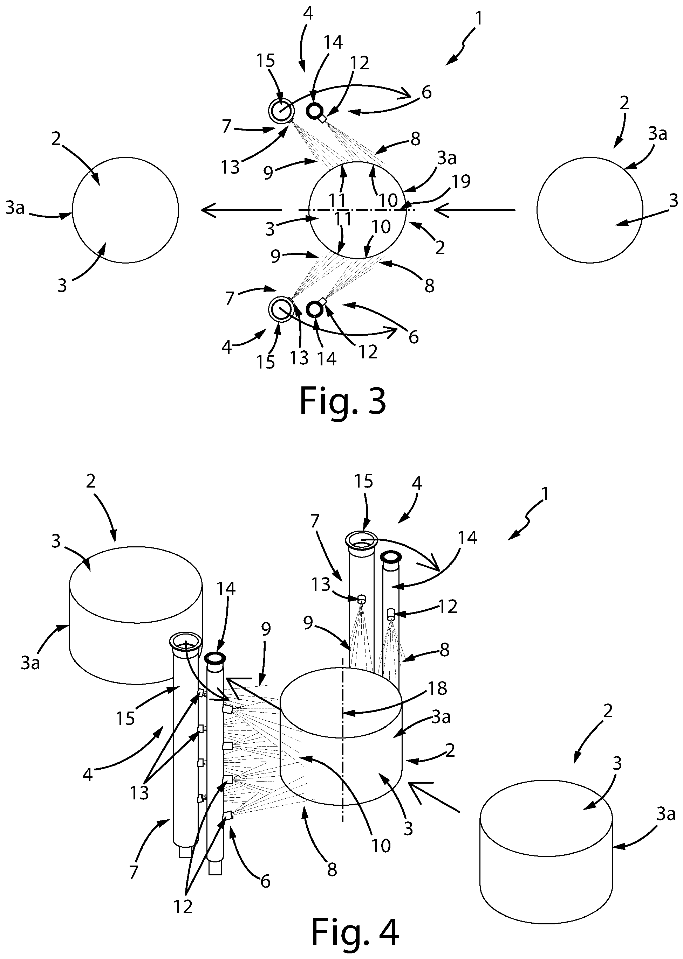

In a further advantageous embodiment, such as, for example, that illustrated in Figures 3 and 4, the mutual rotation of the wheel of cheese 2 with respect to the treatment means 4 may take place alternately in the two directions of rotation, preferably by an angle of rotation less than the round angle; in this case, advantageously, the system 1 comprises at least two pairs each comprising one or more first nozzles 12 and corresponding one or more second nozzles 13, advantageously arranged on opposite sides with respect to a mean plane 17 of the wheel of cheese 2.

Advantageously, in this case, the one or more first nozzles 12 and one or more second nozzles 13 of the two pairs are oriented and controlled in such a way that, during rotation in a first direction of rotation, half of the lateral surface 3a of the rind 3 is hit firstly by one or more first jets 8, of liquid and, after the predetermined time interval Δt, by corresponding one or more second jets 9, of fluid in the gaseous state, dispensed respectively by the one or more first nozzles 12 and one or more second nozzles 13 of a pair; the other half of the lateral surface 3a is instead hit, during the rotation in the other direction of rotation, firstly by the one or more first jets 8, of liquid and, after the predetermined time interval Δt, by the corresponding one or more second jets 9, of fluid in the gaseous state, dispensed respectively by the one or more first nozzles 12 and by the corresponding one or more second nozzles 13 of the other pair. Advantageously, in this case system 1 is configured in such a way that during the dispensing of liquid and fluid in the gaseous state by one pair, the other pair is not dispensing.

Advantageously, the system 1 comprises an electronic control unit, not illustrated, configured to control the various components and of the various actions (e.g. the mutual handling of the wheel of cheese 2 and of the treatment means 4, the dispensing of the first and second jets, etc.) carried out by the system 1.

The operation of the system 1 according to the invention is illustrated below.

A wheel of cheese 2, with for example a cylindrical or prismatic conformation, preferably, but not necessarily, inside a possible treatment chamber, not illustrated, for example a tunnel, of the system 1, can be put into relative motion with respect to the treatment means 4 by means of the handling means 5; for example, the wheel of cheese 2 can be put into relative translational motion, like for example in the advantageous embodiments of Figures 5 and 6, and/or into relative rotary motion, like for example in the advantageous embodiments of Figures 1 to 4.

By activating the treatment means 4, and in particular the first supply means 6, and the second supply means 7, it is possible to dispense, respectively, one or more first jets 8, of a liquid, for example water, and one or more second jets 9, of a fluid in the gaseous state, for example air which hit, firstly the one or more first jets 8 and, after a predetermined time interval Δt, which is advantageously very short (preferably less than a tenth of a second), the one or more second jets 9, a same region 10 of the rind 3 of a wheel of cheese 2 in relative motion with respect to the treatment means 4 by the action of the handling means 5.

The one or more first jets 8 remove from the region of the rind 3 they hit mould, dirt, or other material that may have formed and/or been deposited on the rind 3 during the ripening process; the one or more second jets 9 remove almost instantaneously from the same region of the rind 3 any residues of the liquid dispensed by the one or more first jets 8 that might have remained on the rind 3, thereby preventing such possible residues from remaining on the rind 3, ruining it, and/or penetrating inside the rind 3, reaching the edible paste of the cheese, with the risk of deteriorating it.

Thus, it has been found that the invention solves the above-mentioned task and purposes, since, thanks to the dispensing of the one or more first jets of a liquid, it is possible to effectively remove from the rind mould, dirt, or other material that may have formed and/or been deposited on the rind during the ripening process, removing immediately after any liquid residues, which might ruin the rind and/or penetrate into the edible pulp and deteriorate it, thanks to the one or more second jets of a fluid in the gaseous state.

In addition, the one or more first jets ensure an effective cleaning of the entire surface of the rind.

Yet, the system according to the invention does not require frequent cleaning, as is the case for example with known rotating brush systems, and therefore requires infrequent maintenance, thus reducing maintenance costs and machine downtime.

Finally, it is clear that the system and method according to the invention described herein are susceptible to numerous modifications or variations, all falling within the invention; furthermore, all details can be replaced by technically equivalent elements without departing from the scope of the appended claims.

## Claims

1. System (1) for the surface cleaning of a wheel of cheese (2) comprising a cheese rind (3), rigid or semi-rigid, which encloses an edible paste, said system (1) comprising:
- treatment means (4) suitable for cleaning the rind (3) of a wheel of cheese (2);
- handling means (5), suitable for generating a relative motion between a wheel of cheese (2) and said treatment means (4);
wherein
said treatment means (4) comprise first supply means (6), of a liquid, and second supply means (7), of a fluid in the gaseous state, suitable for dispensing a first jet (8), of a liquid, and a second jet (9), of a fluid in the gaseous state, respectively,
wherein said handling means (5), said first supply means (6) and said second supply means (7), are configured in such a way that a region (10) of the rind (3) of a wheel of cheese (2), in relative motion with respect to said treatment means (4) by the action of said handling means (5), is hit firstly by said first jet (8) and, after a predetermined time interval (Δt), by said second jet (9),
**characterized in that** said first supply means (6) and said second supply means (7) are suitable for dispensing said first jet (8) of a liquid and said second jet (9) of a fluid in the gaseous state, respectively, to hit, at the same time, two regions (10, 11), respectively, which are contiguous, of the rind (3) of a wheel of cheese (2) which is in relative motion with respect to said treatment means (4) by the action of said handling means (5).

2. System (1), as in claim 1, wherein said predetermined time interval (Δt) is less than 1 second.

3. System (1), as in one or more of previous claims, wherein said first supply means (6) comprise one or more first nozzles (12), and wherein said second supply means (7) comprise one or more second nozzles (13).

4. System (1), as in claim 3, wherein said handling means (5) are configured to generate a relative motion between a wheel of cheese (2) and said one or more first nozzles (12) and said one or more second nozzles (13).

5. System (1), as in one or more of previous claims, wherein said handling means (5) comprise one or more conveyor belts (16) and/or groups of rollers on which a wheel of cheese (2) can be placed, so as to pass it through a zone of said system (1) wherein said first jet (8) and said second jet (9) are dispensable, from said first supply means (6) and said second supply means (7) respectively.

6. System (1), as in one or more of previous claims, wherein said handling means (5) comprise rotation means suitable for rotating a wheel of cheese (2) relative to said first and second supply means (6, 7) and/or vice versa, in such a way that, during the rotation, firstly said first jet (8), and then, after said predetermined time interval (Δt), said second jet (9), hit a same region (10) of the lateral surface (3a) of the rind (3) of said wheel of cheese (2).

7. System (1), as in one or more of previous claims, wherein said treatment means (4) comprise means for treating a fluid in the gaseous state, which are configured to heat and/or to sanitize and/or to filter a fluid in the gaseous state before dispensing it by said second supply means (7), and/or wherein said treatment means (4) comprise means for treating a liquid, configured to heat and/or to sanitize and/or to filter a liquid before dispensing it by said first supply means (6).

8. System (1), as in one or more of previous claims, wherein said fluid in the gaseous state is or comprises water vapor or air,
and/or wherein said liquid is or comprises water, or water added with one or more additives.

9. Method for the surface cleaning of a wheel of cheese (2) comprising a rind (3), rigid or semi-rigid, which encloses an edible paste, wherein said method comprises the following steps:
- generating, by handling means (5), a relative motion between a wheel of cheese (2) and treatment means (4) comprising first supply means (6), of a liquid, and second supply means (7) of a fluid in the gaseous state, suitable for dispensing a first jet (8), of a liquid, and a second jet (9), of a fluid in the gaseous state, respectively;
- hitting a same region (10) of said rind (3), during said relative motion, firstly with said first jet (8) and then, after a predetermined time interval (Δt), with said second jet (9),
**characterized in that** said predetermined time interval (Δt) is less than 1 second.

## Patentansprüche

1. System (1) zur Oberflächenreinigung eines Käselaibs (2), der eine starre oder halbstarre Käserinde (3) aufweist, die eine essbare Masse umschließt, wobei das System (1) umfasst:
- Behandlungsmittel (4) zum Reinigen der Rinde (3) eines Käselaibs (2);
- Handhabungsmittel (5), die geeignet sind, eine relative Bewegung zwischen einem Käselaib (2) und den Behandlungsmitteln (4) zu erzeugen;
wobei
die Behandlungsmittel (4) erste Zufuhrmittel (6) für eine Flüssigkeit und zweite Zufuhrmittel (7) für ein Fluid im gasförmigen Zustand umfassen, die geeignet sind, einen ersten Strahl (8) für eine Flüssigkeit bzw. einen zweiten Strahl (9) für ein Fluid im gasförmigen Zustand abzugeben,
wobei die Handhabungsmittel (5), die ersten Mittel (6) und die zweiten Zuführungsmittel (7) so gestaltet sind, dass ein Bereich (10) der Rinde (3) eines Käselaibs (2), der sich durch die Wirkung der Handhabungsmittel (5) in Relativbewegung zu den Behandlungsmitteln (4) befindet, zunächst von dem ersten Strahl (8) und nach einem vorbestimmten Zeitintervall (Δt) von dem zweiten Strahl (9) getroffen wird,
**dadurch gekennzeichnet, dass** die erste Versorgungseinrichtung (6) und
die zweiten Zuführungsmittel (7) geeignet sind, den ersten Strahl (8) einer Flüssigkeit bzw. den zweiten Strahl (9) eines Fluids im gasförmigen Zustand abzugeben, um gleichzeitig zwei aneinandergrenzende Bereiche (10, 11) der Rinde (3) eines Käselaibs (2) zu treffen, der sich durch die Wirkung der Handhabungsmittel (5) relativ zu den Behandlungsmitteln (4) in Bewegung befindet.

2. System (1) nach Anspruch 1, wobei das vorbestimmte Zeitintervall (Δt) weniger als 1 Sekunde beträgt.

3. System (1), wie in einem oder mehreren der vorhergehenden Ansprüche, wobei die ersten Zufuhrmittel (6) eine oder mehrere erste Düsen (12) umfassen und wobei die zweiten Zufuhrmittel (7) eine oder mehrere zweite Düsen (13) umfassen.

4. System (1) nach Anspruch 3, wobei die Handhabungsmittel (5) so konfiguriert sind, dass sie eine relative Bewegung zwischen einem Käselaib (2) und der einen oder den mehreren ersten Düsen (12) und der einen oder den mehreren zweiten Düsen (13) erzeugen.

5. System (1) nach einem oder mehreren der vorhergehenden Ansprüche, wobei die Handhabungsmittel (5) ein oder mehrere Förderbänder (16) und/oder Rollengruppen umfassen, auf denen ein Käselaib (2) platziert werden kann, um ihn durch eine Zone des Systems (1) zu führen, in der der erste Strahl (8) und der zweite Strahl (9) von den ersten Zuführungsmitteln (6) bzw. den zweiten Zuführungsmitteln (7) abgegeben werden können.

6. System (1), wie in einem oder mehreren der vorhergehenden Ansprüche, wobei das Handhabungsmittel. (5) Rotationsmittel umfassen, die geeignet sind, einen Käselaib (2) relativ zu den ersten und zweiten Zuführungsmitteln (6, 7) und/oder umgekehrt so zu drehen, dass während der Drehung zuerst der erste Strahl (8) und dann, nach dem vorbestimmten Zeitintervall (Δt), der zweite Strahl (9) auf einen gleichen Bereich (10) der Seitenfläche (3a) der Rinde (3) des Käselaibs (2) trifft.

7. System (1), wie in einem oder mehreren der vorhergehenden Ansprüche, wobei die Behandlungsmittel (4) Mittel zur Behandlung eines Fluids im gasförmigen Zustand umfassen, die so konfiguriert sind, dass sie ein Fluid im gasförmigen Zustand erwärmen und/oder desinfizieren und/oder filtern, bevor sie es durch die zweiten Versorgungsmittel (7) abgeben,
und/oder wobei die Behandlungsmittel (4) Mittel zur Behandlung einer Flüssigkeit umfassen, die so konfiguriert sind, dass sie eine Flüssigkeit erwärmen und/oder desinfizieren und/oder filtern, bevor sie von den ersten Versorgungsmitteln (6) abgegeben werden.

8. System (1), wie in einem oder mehreren der vorhergehenden Ansprüche, wobei das Fluid im gasförmigen Zustand Wasserdampf oder Luft ist oder umfasst,
und/oder wobei die Flüssigkeit Wasser oder mit einem oder mehreren Zusatzstoffen versetztes Wasser ist oder umfasst.

9. Verfahren zur oberflächlichen Reinigung eines Käselaibs (2) mit einer starren oder halbstarren Rinde (3), die eine essbare Masse umschließt, **dadurch gekennzeichnet, dass** das Verfahren die folgenden Schritte umfasst:
- Erzeugen einer Relativbewegung zwischen einem Käselaib (2) und einer Behandlungseinrichtung (4) durch eine Handhabungseinrichtung (5), die eine erste Zufuhreinrichtung (6) für eine Flüssigkeit und eine zweite Zufuhreinrichtung (7) für ein Fluid im gasförmigen Zustand umfasst, die geeignet sind, einen ersten Strahl (8) für eine Flüssigkeit bzw. einen zweiten Strahl (9) für ein Fluid im gasförmigen Zustand abzugeben;
- Auftreffen auf denselben Bereich (10) der Rinde (3) während der Relativbewegung zunächst mit dem ersten Strahl (8) und dann, nach einem vorgegebenen Zeitintervall (Δt), mit dem zweiten Strahl (9),
**dadurch gekennzeichnet, dass** das vorbestimmte Zeitintervall (Δt) weniger als 1 Sekunde beträgt.

## Revendications

1. Système (1) pour le nettoyage de surface d'une roue de fromage (2) comprenant une croûte de fromage (3), rigide ou semi-rigide, qui renferme une pâte comestible, ledit système (1) comprenant:
- des moyens de traitement (4) adaptés au nettoyage de la croûte (3) d'une roue de fromage (2);
- des moyens de manutention (5), aptes à générer un mouvement relatif entre une roue de fromage (2) et lesdits moyens de traitement (4);
dans lequel
lesdits moyens de traitement (4) comprennent des premiers moyens d'alimentation (6), d'un liquide, et des seconds moyens d'alimentation (7), d'un fluide à l'état gazeux, aptes à distribuer un premier jet (8), d'un liquide, et un second jet (9), d'un fluide à l'état gazeux, respectivement,
dans lequel lesdits moyens de manipulation (5), lesdits premiers moyens (6) et lesdits seconds moyens d'alimentation (7), sont configurés de telle sorte qu'une région (10) de la croûte (3) d'une roue de fromage (2), en mouvement relatif par rapport auxdits moyens de traitement (4) sous l'action desdits moyens de manipulation (5), est frappée tout d'abord par ledit premier jet (8) et, après un intervalle de temps prédéterminé (Δt), par ledit second jet (9),
**caractérisé en ce que** ledit premier moyen d'alimentation (6) et
lesdits seconds moyens d'alimentation (7) sont aptes à distribuer ledit premier jet (8) d'un liquide et ledit second jet (9) d'un fluide à l'état gazeux, respectivement, pour frapper, en même temps, deux régions (10, 11), respectivement, contiguës, de la croûte (3) d'une roue de fromage (2) qui est en mouvement relatif par rapport auxdits moyens de traitement (4) sous l'action desdits moyens de manutention (5).

2. Système (1) selon la revendication 1, dans lequel l'intervalle de temps prédéterminé (Δt) est inférieur à 1 seconde.

3. Système (1), tel que décrit dans une ou plusieurs des revendications précédentes, dans lequel les premiers moyens d'alimentation (6) comprennent une ou plusieurs premières buses (12), et dans lequel les seconds moyens d'alimentation (7) comprennent une ou plusieurs secondes buses (13).

4. Système (1) selon la revendication 3, dans lequel lesdits moyens de manutention (5) sont configurés pour générer un mouvement relatif entre une roue de fromage (2) et lesdites une ou plusieurs premières buses (12) et lesdites une ou plusieurs secondes buses (13).

5. Système (1), tel que décrit dans une ou plusieurs des revendications précédentes, dans lequel lesdits moyens de manutention (5) comprennent une ou plusieurs bandes transporteuses (16) et/ou des groupes de rouleaux sur lesquels une roue de fromage (2) peut être placée, de manière à la faire passer à travers une zone dudit système (1) dans laquelle ledit premier jet (8) et ledit second jet (9) peuvent être distribués, à partir desdits premiers moyens d'alimentation (6) et desdits seconds moyens d'alimentation (7), respectivement.

6. Système (1), tel que décrit dans une ou plusieurs des revendications précédentes, dans lequel lesdits moyens de manutention. (5) comprennent des moyens de rotation aptes à faire tourner une roue de fromage (2) par rapport auxdits premier et second moyens d'alimentation (6, 7) et/ou vice versa, de telle sorte que, pendant la rotation, d'abord ledit premier jet (8), puis, après ledit intervalle de temps prédéterminé (Δt), ledit second jet (9), frappent une même région (10) de la surface latérale (3a) de la croûte (3) de ladite roue de fromage (2).

7. Système (1), tel que décrit dans une ou plusieurs des revendications précédentes, dans lequel lesdits moyens de traitement (4) comprennent des moyens de traitement d'un fluide à l'état gazeux, qui sont configurés pour chauffer et/ou désinfecter et/ou filtrer un fluide à l'état gazeux avant de le distribuer par lesdits seconds moyens d'alimentation (7),
et/ou dans lequel lesdits moyens de traitement (4) comprennent des moyens de traitement d'un liquide, configurés pour chauffer et/ou désinfecter et/ou filtrer un liquide avant de le distribuer par lesdits premiers moyens d'alimentation (6).

8. Système (1), tel que décrit dans une ou plusieurs des revendications précédentes, dans lequel ledit fluide à l'état gazeux est ou comprend de la vapeur d'eau ou de l'air, et/ou dans lequel ledit liquide est ou comprend de l'eau, ou de l'eau additionnée d'un ou plusieurs additifs.

9. Procédé de nettoyage superficiel d'une roue de fromage (2) comprenant une croûte (3), rigide ou semi-rigide, qui renferme une pâte comestible, dans lequel ledit procédé comprend les étapes suivantes:
- générer, par des moyens de manutention (5), un mouvement relatif entre une roue de fromage (2) et des moyens de traitement (4) comprenant des premiers moyens d'alimentation (6) en liquide et des seconds moyens d'alimentation (7) en fluide à l'état gazeux, aptes à distribuer respectivement un premier jet (8) de liquide et un second jet (9) de fluide à l'état gazeux;
- frapper une même région (10) de ladite couenne (3), au cours dudit mouvement relatif, d'abord avec ledit premier jet (8) puis, après un intervalle de temps prédéterminé (Δt), avec ledit second jet (9),
**caractérisé par le fait que** l'intervalle de temps prédéterminé (Δt) est inférieur à 1 seconde.
